# EUROPEAN PATENT APPLICATION

(11) **EP 3 351 613 A1**
(43) Date of publication of application: **25.07.2018**
(21) Application number: 17151916.8
(22) Date of filing: 18.01.2017
(51) Int. Cl.: C12G 3/08, C12H 1/02, C12C 5/02, C12C 11/11

(54) **PROCESS FOR THE PRODUCTION OF BEER OR CIDER CONCENTRATE**

(71) Applicant: Anheuser-Busch InBev S.A., 1000 Brussels (BE)
(72) Inventor: The designation of the inventor has not yet been filed
(74) Representative: BiiP cvba

(57) **Abstract**

A method for preparing beer concentrate, comprising the steps of:
A) Subjecting beer or cider (1) to a first concentration step to obtain a retentate (2) and a permeate (3) comprising alcohol (3a) and volatile flavour components (3b),
B) Subjecting the permeate (3) to an adsorption unit whereby the volatile flavour and alcohol-containing permeate is passed over or through an adsorption unit,
C) Recovering one or more of the flavour components (3b) from the adsorption unit in a further recuperation process
D) Combining the retentate (2) with the flavour components (3b)

## Description

### TECHNICAL FIELD

The present invention concerns a method for preparing beer or cider concentrate comprising alcohol and flavour components, and further beer or cider, respectively prepared therefrom. In particular the invention concerns a multi-step concentration method wherein the first step involves a concentration step which results in a concentrated retentate and an aqueous permeate fraction comprising alcohol and volatile flavour components, and whereby the volatile flavour and alcohol-containing permeate is passed over or through an adsorption unit.

### BACKGROUND OF THE INVENTION

In recent years, home dispensing appliances for domestic use, wherein multiple beverage components or beverages are added to one another so that consumers can create at home their own compositions adapted to their tastes, have become very popular. This trend also applies to fermented beverages, such as malt based fermented beverages, like beers of various flavours and types.

A further way, on the one end, for reducing the cost of packaging per unit volume of beer, and, on the other hand, for offering the consumers a large palette of choice is to provide containers filled with beer concentrates which can be used alone or admixed with one another and diluted with a liquid diluent. The containers can be in the form of containers as such or as unit doses such as capsule or a pod. By mixing such beer concentrates with a liquid diluent a desired beverage can be created *in situ* and subsequently or simultaneously served. The addition and mixing of the liquid diluent to the unit dose is generally carried out in a dispensing appliance.

The underlying problem to produce the final beer beverage starting from a beer concentrate is to meet as much as possible the specifications assigned to regular not reconstituted beers such as bottled beers, canned beers and especially drafted beers. This problem represents major challenges especially on the flavour consumer's acceptance level such as distinctive aroma, taste and mouth feel given the fact that most concentration procedures lead to reduction in many flavour or aroma components.

The flavour (taste and smell) of beer is determined by flavour substances that originate from raw materials (malt, hop) as well as by flavour substances that are formed in the course of the brewing process, notably during heat treatments (mashing, wort boiling) and fermentation. Beer contains a large number of different flavour substances, including volatile and non-volatile components. Important beer flavour substances include hydrophobic as well as hydrophilic compounds. The relative concentration levels in which these flavour substances occur in a beer determine the flavour character or flavour profile of the beer. A major challenge for every brewer is to ensure constant flavour quality.

Since quality and composition of the natural raw materials used in beer brewing tend to vary and given that the flavour generation pathways responsible for the formation of flavour substances during brewing are affected by many different factors, it is evident that maintaining constant beer flavour quality is indeed a very difficult task. The flavour profile of beer is strongly dependent on the concentration levels of certain volatile beer flavour substances that are formed during fermentation. Typical examples of such beer flavour substances include: diacetyl(butane-2,3-dione);acetaldehyde;dimethylsulfide;ethylacetate; isoamyl acetate (3-methyl-1-butylacetate);ethylvalerate(ethylpentanoate);ethylhexanoate; iso-amyl alcohols (3-methylbutan-1-ol); 2-methylbutan-1-ol.

Beer in particular is a very challenging beverage to produce a concentrate from because, unlike beverages produced from fruit juice fermentation such as winey; the aromas present in beer are subtler and much less concentrated, which means that losing even a small portion of them at the concentration stage will have a profound effect on the organoleptic perception of the final rehydrated product. In addition, because of the great popularity of the drink and existence of a wide public of demanding beer aficionados, the reconstituted drink is expected to meet expectations with regard to its distinctive aroma, taste, mouthfeel, foaming properties, colour, and even haze perception. Reconstituted beer simply cannot taste like a diluted beer missing some characteristics; for gaining consumer acceptance it simply must have all the qualities of the "real" unprocessed beer.

Methods for producing beer concentrates and then rehydrating them into final beverages are known in the art. Various methods for concentrating alcoholic beverages that are known in the brewing industry include such processes as freeze-drying, reverse osmosis, and filtration. The present invention provides a method for producing a naturally alcohol-enriched beer concentrate of high density, said method providing an advantageous concentration factor potential of at least 5, 10, 15, up to 20 or more, while at the same time ensuring high and selective retention of natural beer flavouring compounds, including the volatile ones. These and other advantages of the present invention are presented in continuation.

### SUMMARY OF THE INVENTION

The present invention is defined in the appended independent claims. Preferred embodiments are defined in the dependent claims. In particular , the present invention is directed to a method for preparing beer concentrate, comprising the steps of:
A) Subjecting beer or cider (1) to a first concentration step to obtain a retentate (2) and a permeate (3) comprising alcohol (3a) and volatile flavour components (3b),
B) Subjecting the permeate (3) to an adsorption step whereby the volatile flavour and alcohol-containing permeate is passed over or through an adsorption unit,
C) Recovering the flavour components (3b) from the adsorption unit in a further recuperation process
D) Combining the retentate (2) with the flavour components (3b)

In particular, the present invention concerns a method for preparing beer concentrate, comprising the steps of:
a) Subjecting beer or cider (1) to a first concentration step comprising reverse osmosis and/or microfiltration and/or nanofiltration and/or ultrafiltration (A) to obtain a retentate (2) and a fraction comprising alcohol and volatile flavour components (3), wherein the retentate (2) is characterised by the concentration of unfilterable compounds equal to or higher than 20% (w/w), preferably 30% (w/w), most preferably 40% (w/w), as calculated from density measurement corrected for the alcohol amount;
b) Subjecting the permeate (3) to an adsorption step whereby the volatile flavour and alcohol-containing permeate is passed over or through an adsorption unit,
c) Recovering the flavour components (3b) from the adsorption unit in a further recuperation process
*d)* Combining the retentate (2) with the flavour components (3b)

The concentrated volatile flavour fractions can, independently of one another, be added to the retentate or can be used as an ingredient for beer or cider, as a component in beer or cider reconstitution or as a flavour component to be added to a beer or cider.

### BRIEF DESCRIPTION OF THE FIGURES

For a detailed understanding of the nature of the present invention, reference is made to the following detailed description taken in conjunction with the accompanying drawings in which:

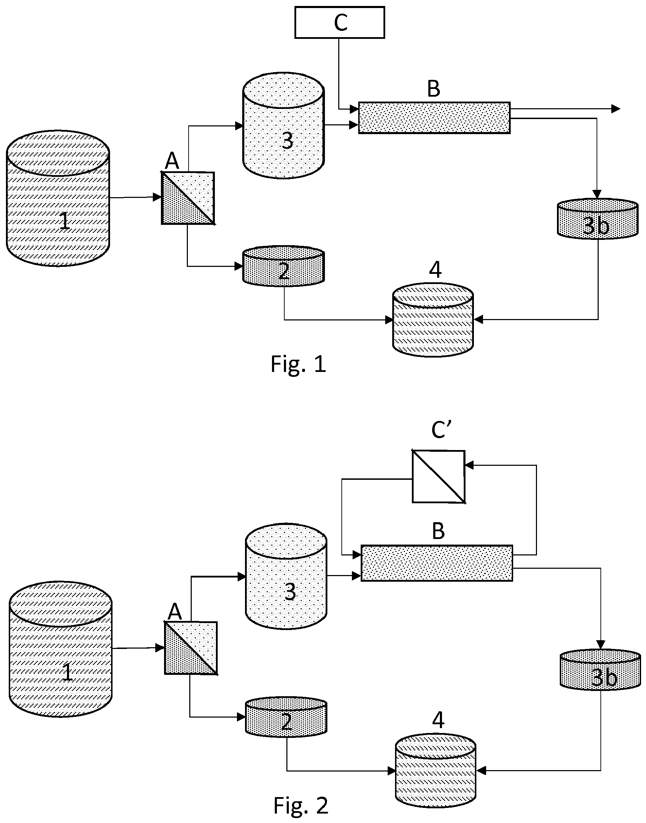

**Figure 1****:** shows a block diagram schematically illustrating key steps of the method according to the present invention. A - first concentration step B - second concentration step comprising the adsorption unit; C- desorption step
   1 - beer subjected to microfiltration/nanofiltration/ultrafiltration/reverse osmosis; 2 - retentate; 3 - permeate comprising ethanol 3a) and volatile aroma components 3b; 4 - concentrated beer or cider
**Figure 2****:** shows a block diagram schematically illustrating key steps of a further embodiment method according to the present invention. A - first concentration step ; B - second concentration step comprising adsorption unit; C' - fractionation step, preferably distillation C- Desorption step
   1 - beer subjected to microfiltration/nanofiltration/ultrafiltration/reverse osmosis 2 - retentate; 3 - permeate comprising ethanol 3a) and volatile aroma components 3b); 4 - concentrated beer or cider;

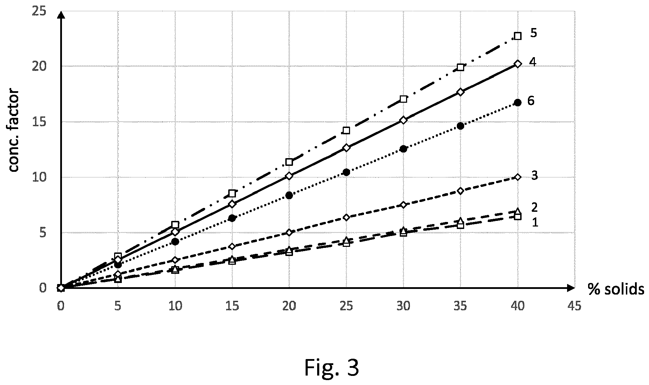

**Figure 3****:** shows a graph illustrating the relationship between the concentration factors of different retentates (4) obtained from different beers (beer 1-4), and the amount of unfilterable compounds ("% solids") achieved is said retentates following the first concentration step and retentate concentration step (RC) according to the method of the invention.

### DEFINITIONS

As used herein, the term "**concentrate**" is given the definition of Oxford dictionary: "A substance made by removing or reducing the diluting agent; a concentrated form of something" (cf. http://www.oxforddictionaries.com/definition/english/concentrate). In line with this, the term "beer or cider concentrate" or, alternatively "(concentrated) beer or cider base" or "beer or cider syrup", is meant to relate to beer or cider, respectively which had the majority of its solvent component - i.e. water - removed, while retaining most of the dissolved components conferring such features as taste, smell, colour, mouthfeel etc.

As used herein, the term **"beer"** is to be construed according to a rather broad definition:
"the drink obtained by fermenting from a wort, prepared with starchy or sugary raw materials, including hop powder or hop extracts and drinkable water. Aside from barley malt and wheat malt, only the following may be considered for brewing, mixed with e.g.
wheat malt, starchy or sugary raw materials in which the total quantity may not exceed 80%, preferably 40% of the total weight of the starchy or sugary raw materials:
   (a) maize, rice, sugar, wheat, barley and the various forms of them.
   (b) saccharose, converted sugar, dextrose and glucose syrup.

Although according to certain national legislations, not all fermented malt-based beverages can be called beer, in the context of the present invention, the term "beer" and "fermented malt based beverage" are used herein as synonyms and can be interchanged. It follows, that as used herein the terms "reconstituted beer" and "reconstituted fermented malt based beverage" are to be understood as beverages composition-wise substantially identical to beer but obtained by addition of the solvent, i.e. water or carbonated water, to a previously prepared beer concentrate.

Next, as used herein, the term **"cider"** is to be understood as every alcoholic beverage resulting from the fermentation of apple juice or apple juice mixed with up to 10% pear juice. This term also encompasses the any product of this fermented apple juice further modified by adding such standard cider manufacturing additives as acids (citric or tartaric) and/or sugar, filtering, cooling, saturating with carbon dioxide, pasteurizing, etc., which is commercialized under the term cider.

Further, as used herein the term "*volatile flavour components*" shall be understood as any of the substances comprised in beer that contribute to its complex olfactory profile, said substances by their chemical nature having a boiling point lower than that of water. Examples of volatile beer flavour components include but are not limited to acetaldehyde, N-propanol, ethyl acetate, isobutyl alcohol, isoamyl alcohol, isoamyl acetate, ethyl hexanoate, ethyl octanoate.

As used herein, the term "*unfilterable compounds*" is to be understood as referring to all the diverse compounds comprised in any type of beer or cider, which cannot pass through a **nanofiltration** membrane, i.e. beer compounds having the mean size greater than 150 Da, 180 Da, or 200 Da, which is the molecular weight retention size cut-off depending on a given nanofiltration membrane. As opposed to the "*filterable compounds*" comprising water, monovalent and some bivalent ions, low molecular alcohols such as ethanol, low molecular esters and a number of volatile flavour components, the unfilterable compounds mainly include sugars, mostly polysaccharides; sugar alcohols, polyphenols, pentosans, peptides and proteins, high molecular weight alcohols, high molecular weight esters, partially multivalent ions, and many other mainly organic and highly divergent compounds that vary depending on the beer or cider type. Due the complexity and discrepancies between different beer or cider compositions, the collective concentration of the unfilterable compounds is often referred to (in great simplification and without being exact) as "concentration of sugars" or "concentration of solids" and can be easily calculated from mass balance considerations taking into account of parameters such as density, viscosity, beer rheology, original gravity or extract, real gravity or extract, degree of fermentation (RDF) and/or alcohol content. In brewing practice, the concentration of unfilterable compounds is routinely estimated from density (real extract) measurement corrected for the density of the measured ethanol amount, ethanol being the most prevalent compound of density < 1 g/cm³ and therefore affecting the density measurement most substantially. Such measurements are well known in the art, are routinely performed using standard beer analysing systems like Anton Paar Alcolyzer device, and thus are readily and easily performable by any person skilled in beer brewing.

The amount of components dissolved in beer can also be expressed as so called specific gravity (relative density) or apparent specific gravity. The first one is measured as density (weight per unit volume) of beer divided by the density of water used as a reference substance, whereas the second one as the weight of a volume of beer to the weight of an equal volume of water. For example, a specific gravity of 1.050 ("50 points") indicates that the substance is 5% heavier than an equal volume of water. The densities of water, and consequently also beer, vary with temperature; therefore for both specific gravity and apparent specific gravity the measurement of the sample and the reference value is done under the same specified temperature and pressure conditions. Pressure is nearly always 1 atm equal to 101.325 kPa, while temperatures may differ depending on the choice of further systems for approximating beer density. Examples of such systems are two empirical scales, Plato and the Brix scale, that are commonly used in brewing and wine industries, respectively. Both scales represent the strength of the solution as percentage of sugar by mass; one degree Plato (abbreviated °P) or one degree Brix (symbol °Bx) is 1 gram of sucrose in 100 grams of water. There is a difference between these units mainly due to both scales being developed for solutions of sucrose at different temperatures, but it is so insignificant that they may be used virtually interchangeably. For example, beer measured at 12° Plato at 15.5°C has the same density as a water-sucrose solution containing 12% sucrose by mass at 15.5°C, which is approximately equal to 12° Brix, being the same density as a water-sucrose solution containing 12% sucrose by mass at 20°C. The Plato and Brix scales have an advantage over specific gravity in that they expresses the density measurement in terms of the amount of fermentable materials, which is particularly useful at early stages of brewing. As, of course, both beer and wort are composed of more solids than just sucrose, it is not exact. The relationship between degrees Plato and specific gravity is not linear, but a good approximation is that 1°P equals 4 "brewer's points" (4 x 0.001); thus 12° Plato corresponds to specific gravity of 1.048 [1+(12 x 4 x .001)].

The term "*original gravity*" or "*original extract*" refers to specific gravity as measured before fermentation, whereas the term "*final gravity*" or "*final extract*" relates to specific gravity measured at the completion of fermentation. In general, gravity refers to the specific gravity of the beer at various stages in its fermentation. Initially, before alcohol production by the yeast, the specific gravity of wort (i.e. the ground malt before beer fermentation) is mostly dependent on the amount of sucrose. Therefore, the original gravity reading at the beginning of the fermentation can be used to determine sugar content in Plato or Brix scales. As fermentation progresses, the yeast convert sugars to carbon dioxide, ethanol, yeast biomass, and flavour components. The lowering of the sugar amount and the increasing presence of ethanol, which has appreciably lesser density than water, both contribute to lowering of the specific gravity of the fermenting beer. Original gravity reading compared to final gravity reading can be used to estimate the amount of sugar consumed and thus the amount of ethanol produced. For example, for a regular beer, original gravity could be 1.050 and final gravity could be 1.010. Similarly, knowing original gravity of a beverage and its alcohol amount can be used to estimate the amount of sugars consumed during the fermentation. The degree to which sugar has been fermented into alcohol is expressed with the term "*real degree of fermentation*" or "RDF", and is often given as a fraction of original gravity transformed into ethanol and CO₂. The RDF of beer is in theory indicative of its sweetness as beers usually have more residual sugar and thus lower RDF.

Concentration steps may involve any of the variety of techniques recognised in the art, which allow partial or substantial separation of water from the beer and thus retention of most of the dissolved therein components in a lower than initial volume. Many of the techniques currently used within the beverage industry rely on the so called membrane technologies, which provide a cheaper alternative to conventional heat-treatment processes and involve separation of substances into two fractions with the help of a semipermeable membrane. The faction comprising particles smaller than the membrane pore size passes through the membrane and, as used herein is referred to as "*permeate*" or "*filtrate*"*.* Everything else retained on the feed side of the membrane as used herein is referred to as "*retentate*"*.*

Typical membrane filtration systems include for example pressure-driven techniques microfiltration, ultrafiltration, nanofiltration and reverse osmosis. As used herein, the term "*microfiltration*" refers to a membrane filtration technique for the retention of particles having size of 0.1 to 10 µm and larger. Usually, microfiltration is a low-pressure process, typically operating at pressures ranging from 0.34 - 3 bar¹. Microfiltration allows separation of particles such as yeast, protozoa, large bacteria, organic and inorganic sediments etc. Then, as used herein, the term "*ultrafiltration*" designates a membrane filtration technique for the retention of particles having size of about 0.01 µm and larger. Ultrafiltration usually retains particles having molecular weight greater than 1000 Dalton, such as most viruses, proteins of certain sizes, nucleic acids, dextrins, pentosan chains ect. Typical operating pressures for ultrafiltration range from 0.48 - 10 bar. Further, as used herein the term "*nanofiltration*" shall be understood as a membrane filtration technique for the retention of particles having size of 0.001 µm to 0.01 µm and larger. Nanofiltration is capable of retaining divalent or multivalent ions, such as divalent salts, and most organic compounds larger than appox. 180 Dalton, which include oligosaccharides and many flavour compounds; while allowing water, ethanol, monovalent ions, and some organic molecules such as many aromatic esters pass through. Operating pressures of 8 - 41 bar are typical for nanofiltration. Where nanofiltration is operated under inlet pressure within the upper end of this range, from 18 bar above, as used herein, it shall be termed "*high pressure nanofiltration*"*.* Lastly, as used herein the term "*reverse osmosis*" shall be understood as referring to a high-pressure membrane process where the applied pressure is used to overcome osmotic pressure. Reverse osmosis usually allows to retain particles having size of 0.00005 µm to 0.0001 µm and larger, i.e. almost all particles and ionic species. Substances with molecular weight above 50 Dalton are retained almost without exception. Operating pressures are typically between 21 and 76 bar, but may reach up to 150 bar in specific applications.
¹ Wherein the unit bar equals 100,000 Pa, in accordance with the definition of IUPAC, [1 Pa = 1 N/m^2 = 1 kg/m*s^2 in SI units]

Further, as used herein the term "*volatile flavour components*" shall be understood as any of the substances comprised in beer that contribute to its complex olfactory profile, said substances by their chemical nature having a boiling point lower than that of water. Examples of volatile beer flavour components include but are not limited to acetaldehyde, N-propanol, ethyl acetate, isobutyl alcohol, isoamyl alcohol, isoamyl acetate, ethyl hexanoate, ethyl octanoate, and many more.

### DETAILED DESCRIPTION OF THE INVENTION

The present invention is directed to a method for preparing beer concentrate, comprising the steps of A) Subjecting beer or cider (1) to a first concentration step to obtain a retentate (2) and a permeate (3) comprising alcohol (3a) and volatile flavour components (3b), B) Subjecting the permeate (3) to an adsorption step whereby the volatile flavour and alcohol-containing permeate is passed over or through an adsorption unit, C) Recovering the flavour components (3b) from the adsorption unit in a further recuperation process D) Combining the retentate (2) with the flavour components (3b).

In a preferred embodiment, the present invention is directed to a method for preparing beer concentrate, comprising the steps of:
A) Subjecting beer or cider (1) to a first concentration step comprising reverse osmosis and/or microfiltration and/or nanofiltration and/or ultrafiltration to obtain a retentate (2) and a permeate (3) comprising alcohol (3a) and volatile flavour components (3b),
B) Subjecting the permeate (3) to an adsorption step whereby the volatile flavour and alcohol-containing permeate is passed over or through an adsorption unit,
C) Recovering the flavour components (3b) from the adsorption unit in a further recuperation process
D) Combining the retentate (2) with the flavour components (3b)

In accordance with a further embodiment, the further recuperation process includes eluting the adsorbed volatile flavour components in a volume of water or alcohol to obtain a concentrated fraction of volatile flavour components. Preferred execution of the method according to the present invention is the method wherein the further recuperation process includes eluting the adsorbed volatile flavour components in a volume of alcohol to obtain a concentrated fraction of volatile flavour components using the alcohol from a distillation step of the alcohol (3a) (Cfr Fig 2)

The adsorbent, or its composition, is selected depending on the flavours to be adsorbed. Preferred flavouring components are selected from acetaldehyde, N-propanol, ethyl acetate, isobutyl alcohol, isoamyl alcohol, isoamyl acetate, ethyl hexanoate, ethyl octanoate. In a preferred process, the adsorption unit comprises multiple serial or parallel adsorption units each unit having a specific high affinity for specific flavour components.

Preferred first concentration steps in accordance with the method of the present invention are those wherein the retentate (2) is characterised by the concentration of unfilterable compounds equal to or higher than 20% (w/w), preferably 30% (w/w), most preferably 40% (w/w), as calculated from density measurement corrected for the alcohol amount.

In case beer (1) is subjected to reverse osmosis (A) in according to the invention, preferably clear beer is used that is treated using any regular beer clarification technique to remove yeast and most of the other particles above 0.2 µm in diameter. Such techniques are standard and well known in the art of beer preparation. For example, they include centrifugation, filtration through e.g. kieselguhr (diatomaceous earth) optionally preceded by centrifugation, or other types of standard microfiltration techniques.

As can be appreciated from the present disclosure, the method of the invention is particularly advantageous for obtaining low-volume high-density beer or cider concentrates with limited or ideally no loss of volatile flavour components. The degree of concentration of the final product largely depends on the degree of concentration of the retentate. In accordance with the present invention, the present invention provides a method wherein the retentate not only comprises majority of beer (or cider) flavour components but also can potentially be characterised by a high concentration factor of 5, 10, 15, or even 20 or higher.

A used herein the term "*concentration factor*" shall be understood as the ratio of the beer or cider volume subjected to step A) to the volume of the obtained retentate at the end of the step A), i.e. the ratio of the feed volume to the volume of the retentate obtained in the step A) of the method of the present invention. In an particularly preferred embodiment, a method in accordance with the previous embodiments is provided, wherein the retentate obtained in step A) is characterised by concentration factor of 5 or higher, preferably 10 or higher, more preferably 15 or higher, most preferably 20 or higher. A relationship between the concentration factor within the above-defined meaning, and the concentration of unfilterable compounds possible to be obtained in the retentate from step A) naturally depends on the type of beer or cider initially subjected to nanofiltration or reverse osmosis, which is shown and can be appreciated from in the graph presented in Figure 3, wherein each line represents a different beverage (lines 1-4 were obtained for different beers, line 5 obtained for cider)

In case of cross-flow filtration we can always achieve the concentration one pass. But to make the operation more economical multi stages operation is done.

In line with the above, the present invention is based on the finding that by concentrating the beer in a first concentration step followed by an adsorption step on the permeate, allows for a high concentration factor while still having tailored volatile flavour components.

After the concentraton step, the highly concentrated retentate (2) is collected while the aqueous permeate (3) is processed by an adsorption unit in order to selectively retrieve volatile flavour components and optionally ethanol.

The permeate of the first concentration step may be subjected to a fractionation, preferably distillation for feeding it back to the adsorption unit as a desorption step, thereby allowing using specific concentration processes for the extract recovery and the volatile flavour recovery.

Figure 1 schematically illustrates a scheme of the method according to the present invention wherein a beer (1) is subjected to a first concentration step comprising foe example ultrafiltration (semi-permeable membrane acting as physical barrier to passage of most beer components of mean molecular weight (MW) > 1000 Da) to obtain a retentate (2) comprising concentrated extract of the beer and a permeate (3) mainly comprising water and ethanol, yet also comprising a an amount of volatile flavour components and some extract. The permeate is subsequently processed by adsorption unit to recover extract and volatile flavour components that can be added to the retentate (2) or can be used as an ingredient for beer or cider, as a component in beer or cider reconstitution or as a flavour component to be added to a beer or cider.

Figure 2 schematically illustrates a scheme of a method according to the present invention wherein a beer (1) is subjected to a first concentration step comprising for example ultrafiltration (semi-permeable membrane acting as physical barrier to passage of most beer components of mean molecular weight (MW) > 1000 Da) to obtain a retentate (2) comprising concentrated extract of the beer and a permeate (3) mainly comprising water and ethanol, yet also comprising a an amount of volatile flavour components and some extract. The permeate (3) is subsequently processed by adsorption unit (B). The fractionation on 3 a) for example by distillation, allows obtaining a fraction comprising ethanol and volatile flavour components which can be fed back to the adsorption unit to desorp 3b flavouring components to obtain a concentrated fraction of volatile flavour components (3b).

The concentrated volatile flavour fraction (3b) can, independently of one another, be added to the retentate or can be used as an ingredient for beer or cider, as a component in beer or cider reconstitution or as a flavour component to be added to a beer or cider.

The distillation mentioned above is a classic example of a fractionation technique known to be particularly suited for separating alcohol and volatile component from water. The term "*distillation*" as used herein refers to the separation of the liquid mixture into the components thereof by utilising the difference in relative volatility and/or boiling point among the components by inducing their successive evaporation and condensation in the process of heating and cooling. Examples of the distillation may include simple distillation, fractional distillation, multistage distillation, azeotropic distillation, and steam distillation.

Distillation forms part of a larger group of separation processes based on phase transition, collectively termed as "*fractionation*"*.* Other examples of fractionation comprise column chromatography that is based on difference in affinity between stationary phase and the mobile phase, and fractional crystallization and fractional freezing both utilising the difference in crystallisation or melting points of different components of a mixture at a given temperature. In an advantageous arrangement of the present invention, method b) may comprise such fractionation, preferably distillation, arrangement, wherein different fractions are analysed for the presence of different components such as different volatile flavour component species and then selectively directed for pooling with the retentate from step a) or discarded, which would provide greater control over aroma profile of the final beer concentrate of the invention.

The flavour profile of concentrated beer can be tailored in an advantageous manner by selectively dosing the concentration levels of some of these flavour substances. This selective adsorption can be achieved in a very effective manner by contacting the permeate with an adsorption unit for example one or more of a column comprising adsorbent for example porous adsorbent particles that selectively adsorb one or more of said beer flavour substances, and by subsequently desorbing a portion of the adsorbed beer flavour substances from the adsorbent and to add this portion back to the concentrated beer or another beer. This embodiment is particularly useful for tailoring the concentration levels of beer flavour esters (ethyl acetate, ethyl hexanoate, ethyl valerate and isoamyl acetate). Furthermore, undesired flavour deviations resulting from elevated concentration levels of one or more of the aforementioned beer flavour substances may be corrected effectively by selectively removing at least a part of these flavour substances using adsorbents with a high affinity for these substances. This embodiment is particularly suitable for reducing the levels of diacetyl, acetaldehyde and/or dimethyl sulfide. The adsorbent employed in accordance with the present invention have an affinity for one or more of the aforementioned beer flavour substances, thus enabling the selective removal of at least one of these beer flavour substances. In addition, the adsorbent typically have a low affinity for ethanol.

Selective desorption of the beer flavour substances adsorbed by the adsorbent is advantageously achieved by passing an eluent through the adsorbent unit under conditions that favour desorption of a subset of the beer flavour substances.

Thus, for instance, adsorbent with high affinity for ethyl acetate, ethyl hexaonate, ethyl valerate and isoamyl acetate can suitably be desorbed under conditions that favour desorption of ethyl hexanoate, ethyl valerate and isoamyl acetate. Thus, these flavour esters may almost quantitatively be removed and separated from the ethyl acetate. Add-back of these three flavour esters to the beer from which they were originally removed yields a beer that has a reduced ethyl acetate content. The eluent employed to desorb beer flavour substances is preferably selected from water, ethanol, mixtures of water and ethanol. In order to trigger the successive release of different beer flavour substances elution conditions may be changed during the desorption process. For instance, the composition of the eluent may be changed, e.g. by varying the ethanol content. Successive release may also be achieved by changing the temperature conditions such as the temperature of the eluent and/or the design and configuration of the desorption unit.

The passageway(s) of the adsorption unit of the present invention may be provided in any suitable form. This may be provided by packing a column, container, vessel or pipe with adsorbent. In another preferred embodiment of a method of the present invention the method comprises the step of column adsorption. Such column absorption comprises the use of a column packed with for example an adsorptive resin. A gravity fed packed column is a particularly suitable form of passageway. The column may be packed in any suitable manner with any suitable arrangement of adsorbent. Preferably the ratio of the length of the column to its diameter is 4:1 or greater. The adsorbent may be provided in any suitable form. A particular suitable form for the adsorbent is in the form of beads which can be in any suitable shape and size.

The adsorption/desorption step can also be carried out using multiple passageways containing adsorbent with eluent added to a level calculated to ensure the tailoring towards specific flavour components. In another preferred embodiment of a method of the present invention the method comprises the step of column adsorption. Such column absorption comprises the use of a column packed with for example an adsorptive resin.

The volume percentage of alcohol can be tailored prior to passing through the further passageways. This is preferably carried out by removing alcohol from the combined alcohol/raw material extract in an evaporator. The fractions may be collected in any suitable manner. Any suitable number of fractions may be collected. The collection of fractions may be arranged to maximise the concentration of a desired flavour component in a particular fraction. In-line spectrophotometer can be used to detect the presence of specific flavour components in the eluate and indicate suitable fractions.
The concentration of alcohol in the eluent mixture can be increased at any suitable, substantially constant rate whilst the eluate contains the flavour components of interest.
The adsorption/desorption step can also be carried out using multiple passageways containing adsorbent with eluent added to a level calculated to ensure the tailoring towards specific flavour components.

The present method can suitably employ adsorbents made from different materials such as resin or a mixture of different resins. Preferably, these adsorbent particles are polymer based, meaning that the particles consist of polymer of that at least the surface of the particles consists of polymer. Examples of polymers that can suitably be employed as adsorbent include polystyrenes, polymethacrylates, mixture and copolymers thereof. Preferred adsorbent are made from crosslinked polystyrene, most preferably a styrene-divinylbenzene copolymer. Adsorbents that can suitably be used , especially to selectively remove diacetyl, acetaldehyde and/or dimethyl sulfide, include adsorbents containing amine functionalities. Examples of such adsorbents include chitosan, Sevalamer™ (copolymer of 2- (chlorom ethyl) oxirane(epichlorohydrin) and prop-2-en-1-amine) and Siliabond™ amine functionalised silicagels.

In a preferred embodiment, the adsorbent have a high affinity constant as defined herein before for one or more esters selected from ethyl acetate, isoamyl acetate, ethyl valerate and ethyl hexanoate, more preferably for one or more esters selected from isoamyl acetate, ethyl valerate and ethyl hexanoate, and most preferably for isoamyl acetate.

## Claims

1. A method for preparing beer concentrate, comprising the steps of:
A) Subjecting beer or cider (1) to a first concentration step to obtain a retentate (2) and a permeate (3) comprising alcohol (3a) and volatile flavour components (3b),
B) Subjecting the permeate (3) to an adsorption unit whereby the volatile flavour and alcohol-containing permeate is passed over or through an adsorption unit,
C) Recovering one or more of the flavour components (3b) from the adsorption unit in a further recuperation process
D) Combining the retentate (2) with the flavour components (3b)

2. A method according to claim 1 whereby said first concentration step comprise reverse osmosis and/or microfiltration and/or nanofiltration and/or ultrafiltration to obtain a retentate (2) and a permeate (3) comprising alcohol (3a) and volatile flavour components (3b),

3. A method according to claims 1-2 wherein the adsorption unit includes one or more of a flavour-adsorbing adsorbent

4. A method according to claim 3 wherein the flavour-adsorbing adsorbent includes a resin or a mixture of different resins

5. A method according to claims 1-4, wherein the further recuperation process includes eluting the adsorbed volatile flavour components in a volume of water or alcohol to obtain a concentrated fraction of volatile flavour components

6. The method according to claims 1-5, wherein the further recuperation process includes eluting the adsorbed volatile flavour components in a volume of alcohol to obtain a concentrated fraction of volatile flavour components using the alcohol from a distillation step of the alcohol (3a)

7. The method according to claims 1-6 wherein one or more adsorbent, or its composition, is selected depending on the flavours to be adsorbed.

8. The method according to claims 1-7 whereby said flavouring components are selected from acetaldehyde, N-propanol, ethyl acetate, isobutyl alcohol, isoamyl alcohol, isoamyl acetate, ethyl hexanoate, ethyl octanoate.

9. The method according to claims 1-8 whereby the adsorption unit comprises a packed column adsorption.

10. Use of a fraction comprising volatile flavour components or of a concentrated fraction comprising volatile flavour components obtained by a method as identified in any of claims 1 to 9 as an ingredient for beer or cider, as a component in beer or cider reconstitution or as a flavour component to be added to a beer or cider.
